(19) Europäisches Patentamt
European Patent Office
Office européen des brevets

(11) Veröffentlichungsnummer : **0 118 083**
**B1**

(12) # EUROPÄISCHE PATENTSCHRIFT

(45) Veröffentlichungstag der Patentschrift : **21.01.87**

(51) Int. Cl.⁴ : **C 08 G 63/54**, C 08 G 63/20

(21) Anmeldenummer : **84101887.2**

(22) Anmeldetag : **23.02.84**

(54) **Aromatische Polyester, Verfahren zu ihrer Herstellung und ihre Verwendung zur Herstellung von Spritzgussartikeln, Folien und Überzügen.**

(30) Priorität : **05.03.83 DE 3307908**

(43) Veröffentlichungstag der Anmeldung : **12.09.84 Patentblatt 84/37**

(45) Bekanntmachung des Hinweises auf die Patenterteilung : **21.01.87 Patentblatt 87/04**

(84) Benannte Vertragsstaaten : **DE FR GB IT**

(56) Entgegenhaltungen :
**FR-A- 2 036 957**
**PATENTS ABSTRACTS OF JAPAN, Band 6, Nr. 244 (C-138)[1122], 2. Dezember 1982**

(73) Patentinhaber : **BAYER AG**
**Konzernverwaltung RP Patentabteilung**
**D-5090 Leverkusen 1 Bayerwerk (DE)**

(72) Erfinder : **Schmidt, Manfred, Dr.**
**Bodelschwinghstrasse 20**
**D-4150 Krefeld (DE)**
Erfinder : **Stix, Wolfgang, Dr.**
**Doerperhofstrasse 15**
**D-4150 Krefeld (DE)**
Erfinder : **Bottenbruch, Ludwig, Dr.**
**Woehlerstrasse 5**
**D-4150 Krefeld (DE)**

**EP 0 118 083 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft thermoplastische aromatische Polyester, deren Molekulargewicht mit speziellen Kettenabbrechern reguliert worden ist, Verfahren zu ihrer Herstellung und die Verwendung dieser Polyester zur Herstellung von Spritzgußartikeln, Folien und Überzügen.

Aromatische Polyester sind bekannt (W.M. Eareckson, J. Polym. Sci. XL, 399-406 (1959) ; André Conix, « Thermoplastic Polyesters from Bisphenols », Ind. Eng. Chem., Vol. 51, No. 2, 147-150, Febr. 1959 ; FR 1 177 517, US 3 351 624, DE-AS 1 445 384). Sie werden aufgrund ihrer ausgezeichneten Eigenschaften überall dort eingesetzt, wo hoher Schmelzpunkt und hohe Glasübergangstemperatur, hohe Wärmeformbeständigkeit und gute Schlag- bzw. Kerbschlagzähigkeit, erwünscht sind.

Obwohl die bislang bekannten aromatischen Polyester viele Anforderungen erfüllen, ist die Fachwelt daran interessiert, die Eigenschaften dieser Polyester weiter zu verbessern. Insbesondere eine höhere Beständigkeit gegen Spannungsrißkorrosion ist in vielen Fällen erwünscht.

Es wurde nun überraschenderweise gefunden, daß spezielle Reste enthaltende aromatische Polyester nach dem Tempern die gewünschte Kombination guter Eigenschaften besitzen.

Gegenstand der Erfindung sind thermoplastische aromatische Polyester auf Basis von Diphenolen, Terephthal- und Isophthalsäure (Säureverhältnis 7 : 3 bis 3 : 7), Kettenabbrechern und gegebenenfalls Verzweigungsmitteln, dadurch gekennzeichnet, daß die aromatischen Polyester pro Mol Diphenolreste 0,01 bis 0,1 vorzugsweise 0,02 bis 0,06, Mol end- oder seitenständige Reste der Formel

$$—CH{=}CH—CH{=}CH—R$$

enthalten, wobei R einen $C_1$-$C_8$-Alkylrest, vorzugsweise Methyl, oder einen $C_6$-$C_{20}$-Kohlenwasserstoffrest, der mindestens einen aromatischen Ring enthält, vorzugsweise Phenyl, bedeutet.

Weiterer Gegenstand der Erfindung ist ein Verfahren zur Herstellung dieser aromatischen Polyester nach an sich bekannten Methoden des Phasengrenzflächenverfahrens oder des Verfahrens in homogener Lösung, dadurch gekennzeichnet, daß man als Kettenabbrecher 0,01 bis 0,1 Mol (pro Mol Diphenol) mindestens einer Verbindung der Formel

$$A—CH{=}CH—CH{=}CH—R \qquad (I)$$

einsetzt, wobei

R einen $C_1$-$C_8$-Alkylrest oder einen $C_6$-$C_{20}$-Kohlenwasserstoffrest, der mindestens einen aromatischen Ring enthält,

A $—CH_2OR^1$ oder

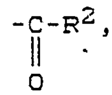

$R^1$ ein Wasserstoffatom oder

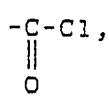

$R^2$ —Cl oder O—Z—$R^3$,

$R^3$ —OH, —COCl oder —OCOCl und

Z einen zweiwertigen ein- oder mehrkernigen aromatischen Rest mit 6-30 C-Atomen bedeuten.

Weiterer Gegenstand der Erfindung ist die Verwendung dieser aromatischen Polyester zur Herstellung von Spritzgußartikeln, Folien und Überzügen.

Bevorzugte Diphenole für die Herstellung der erfindungsgemäßen Polyester sind Verbindungen der Formel

$$HO—Z—OH \qquad (II)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

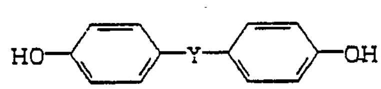

(III)

in der Y eine Einfachbindung, einen Alkylen- oder Alkylidenrest mit 1-7 C-Atomen, einen Cycloalkylen- oder Cycloalkylidenrest mit 5-12 C-Atomen, —O—, —S—,

$$\underset{\underset{O}{\|}}{-S-},$$

—$SO_2$—, oder

$$\underset{\underset{O}{\|}}{-C-}$$

bedeutet, sowie deren kernalkylierte und kernhalogenierte Derivate, z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole

sowie deren kernalkylierte und kernhalogenierte Verbindungen. Diese und weitere geeignete Diphenole sind z. B. in den US-Patentschriften 3 028 365, 3 275 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der franz. Patentschrift, 1 561 518 und in der Monographie von H. Schnell, « Chemistry and Physics of Polycarbonates », Interscience Publishers, New York 1964, beschrieben.

Die wichtigsten Diphenole seien nachfolgend namentlich aufgezählt :

Bisphenol A, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenyl, 4,4'-Dihydroxydiphenylsulfon sowie deren di- und tetrahalogenierte Derivate. Besonders bevorzugt ist Bisphenol A. Es können auch beliebige Mischungen der vorgenannten Diphenole verwendet werden.

Zur Herstellung der erfindungsgemäßen aromatischen Polyester werden Gemische aus Terephthalsäure- und Isophthalsäurekomponenten im Molverhältnis 7 : 3 bis 3 : 7 eingesetzt ; bevorzugt werden Gemische im Molverhältnis 1 : 1.

Die Verbindungen der Formel I sind bekannt.

Erfindungsgemäß zu verwendende bevorzugte Verbindungen der Formel I sind solche, in denen

A —$CH_2OR^1$ oder

$$\underset{\underset{O}{\|}}{-C}-R^2,$$

$R^1$ ein Wasserstoffatom oder

$$\underset{\underset{O}{\|}}{-C}-Cl,$$

$R^2$ —Cl oder —O—Z—$R^3$,
$R^3$ —OH, —COCl oder —OCOCl bedeuten und
Z die oben angegebene Bedeutung hat.

Erfindungsgemäß besonders bevorzugte Verbindungen der Formel (I) sind beispielsweise Sorbinsäurechlorid, Sorbinalkohol, der Chlorkohlensäureester des Sorbinalkohols, Hydrochinonmonosorbinsäureester, 2,2-Bis(4-hydroxyphenyl)-propan-monosorbinsäureester, das Säurechlorid des Sorbinsäure-p-hydroxybenzoesäureesters und das Säurechlorid des Iso- bzw. Terephthalsäure/Sorbinalkohol-Halbesters.

Als Verzweigungsmittel können beispielsweise 3- oder mehrfunktionelle Carbonsäurechloride, wie

Trimesinsäuretrichlorid, Cyanursäuretrichlorid, 3,3',4,4'-Benzophenontetracarbonsäuretetrachlorid, 1,4,5,8-Naphthalintetracarbonsäuretetrachlorid oder Pyromellitsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis [4,4-bis-(4-hydroxyphenyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5-methyl-benzyl)-4-methyl-phenol, 2-(4-Hydroxyphenyl)-2-(2,4-dihydroxyphenyl)-propan, Tetra-(4-[4-hydroxyphenylisopropyl]-phenoxy)-methan, 1,4-Bis-[(4,4''-dihydroxytriphenyl)-methyl]-benzol in Mengen von 0,01 bis 1,0 Mol-% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

Die erfindungsgemäßen aromatischen Polyester gehen beim Erwärmen auf Temperaturen von 90 bis 240 °C, insbesondere von 100 bis 220 °C, infolge der konjugierten Doppelbindungen gewöhnlich eine Reaktion ein, die zu einem höheren Molekulargewicht führt. Der Molekulargewichtsaufbau richtet sich dabei nach der Höhe der Temperatur und nach der Dauer der Wärmebehandlung. Verzweigte Polyester können dabei vernetzte unlösliche Produkt ergeben. Dies ist bei der Verarbeitung in Knetern, Extrudern, Pressen oder Spritzgußmaschinen zu beachten.

Die Möglichkeit der Erhöhung des Molekulargewichts kann auch dazu genutzt werden, die Varbeitung der Polyester zu erleichtern : Man kann z. B. aus einem niedermolekulareren Polyester als üblich Formkörper herstellen und diese dann tempern, wobei sich ein höheres Molekulargewicht ergibt, was wiederum verbesserte Eigenschaften bedeutet.

Falls die geschilderte Erhöhung des Molekulargewichts bei höherer Temperatur unerwünscht ist, empfiehlt es sich, die Zahl der —CH=CH—CH=CH—R-Gruppen niedrig zu halten, gegebenenfalls durch Mitverwendung üblicher Kettenabbrecher, wie z. B. Phenole, aromatischer oder gesättigter aliphatischer Monocarbonsäurehalogenide, Sulfonsäurechloride oder Chlorkohlensäureester, vorzugsweise Phenol, p-tert.-Butylphenol, 2,6-Dimethylphenol, p-Isooctylphenol, Benzoylchlorid, Benzosulfochlorid, Phenylchlorkohlensäureester. Werden sowohl übliche Kettenabbrecher als auch solche der Formel I eingesetzt, soll die Gesamtmenge Kettenabbrecher 0,04 bis 0,15 Mol pro Mol Diphenol betragen.

Die erfindungsgemäßen aromatischen Polyester können nach dem Phasengrenzflächenverfahren (vgl. DE-OS 2 940 024 oder US-PS 3 216 970) oder nach dem Lösungsverfahren in homogener Phase — allgemein « Pyridin-Verfahren » genannt — (vgl. US-PS 3 234 168, DE-AS 1 595 822, DE-OS 2 331 245) hergestellt werden.

Die erfindungsgemäßen aromatischen Polyester besitzen in der Regel relative Viskositäten von 1,1 bis 2,5, insbesondere von 1,2 bis 1,5 (gemessen in 0,5 gew.-%iger Lösung in Dichlormethan bei 25 °C).

Sie können Stabilisatoren, wie beispielsweise Antioxydantien, UV-Stabilisatoren, Fließ- und Entformungshilfsmittel oder andere Additive sowie Füllstoffe wie Glasfasern, Glaskugeln, Asbest- oder Kohlenstoffasern, Kieselgur, Kaolin, Mineralfasern, Gesteinsmehl und Pigmente enthalten.

In den nachfolgenden Beispielen ist die relative Viskosität $\eta$ rel in Dichlormethan bei 25 °C und einer Konzentration von 0,5 Gew.-% bestimmt worden.

## Beispiele

### Beispiel 1

Zu einer Lösung von 236,44 g (1,037 Mol) Bisphenol A und 83,8 g (2.095 Mol) Natriumhydroxid in 4,56 l destilliertem Wasser wurden 3,22 g (10 mMol) Tetra-n-butyl-ammoniumbromid und 3 500 g Dichlormethan gegeben. Innerhalb von 5 Minuten wurde bei 20-25 °C in diese Mischung eine Lösung von 190,82 g (0,94 Mol) einer äquimolaren Mischung von Iso- und Terephthalsäuredichlorid und 7,92 g (61 mMol) Sorbinsäurechlorid in 286 g Dichlormethan eingerührt. Man rührte bei einem pH-Wert von 12-13 noch 20 Minuten, wobei die Temperatur auf 25 °C gehalten wurde. Anschließend wurde die organische Phase abgetrennt, mit 5 gew.-%iger wäßriger Phosphorsäure und mit Wasser gewaschen. Die getrocknete organische Phase wurde am Rotationsverdampfer (Badtemperatur 35 °C) auf 1/3 ihres Volumens eingeengt und der aromatische Polyester mit Petrolether ausgefällt, abgetrennt und bei 25 °C im Vakuum getrocknet. Der erhaltene aromatische Polyester besaß eine relative Viskosität $\eta$ rel von 1.241.

### Beispiel 2

Analog Beispiel 1 wurden folgende Ausgangsmaterialien eingesetzt :

189,24 g (0,83 Mol) Bisphenol A,
67,04 g (1,676 Mol) Natriumhydroxid,
2,576 g (8 mMol) Tetra-n-butylammoniumbromid,
3 648 ml Wasser,
2 800 g Dichlormethan,

159,15 g (0,784 Mol) Tere-/Isophthalsäuredichlorid,
4,176 g (32 mMol) Sorbinsäurechlorid und
940 g (Dichlormethan).

Man erhielt einen aromatischen Polyester einer relativen Viskosität η rel von 1.351.

Beispiel 3

Analog Beispiel 1 wurden folgende Ausgangsmaterialien eingesetzt :

189,24 g (0,83 Mol) Bisphenol A,
67,04 g (1,676 Mol) Natriumhydroxid,
2,576 g (8 mMol) Tetra-n-butylammoniumbromid,
3 648 ml Wasser,
157,93 g (0,778 Mol) Tere-/Isophthalsäuredichlorid,
1,062 g (4 mMol) Trimesinsäuretrichlorid,
4,176 g (32 mMol) Sorbinsäurechlorid und
940 g Dichlormethan.

Der erhaltene aromatische Polyester besaß eine relative Viskosität η rel von 1,422.

Dieses Produkt wurde bei 280 °C 10 Minuten getempert. Aus dem getemperten Material und dem Ausgangsmaterial (ungetempert) wurde je ein Film gegossen.

Die erhaltenen Filme wurden über einen in ein Toluol/Isooctan-Gemisch (1 : 1 Gewichtsteile) getauchten Glasstab gespannt und die beiden Seiten mit je 100 g nach schräg oben gezogen.

Dabei zeigte sich, daß der Film aus dem getemperten Material nach wesentlich längerer Zeit riß als der aus dem ungetemperten Ausgangsprodukt.

**Patentansprüche**

1. Thermoplastische aromatische Polyester auf Basis von Diphenolen, Terephthal- und Isophthalsäure (Säureverhältnis 7 : 3 bis 3 : 7), Kettenabbrechern und gegebenenfalls Verzweigungsmitteln, dadurch gekennzeichnet, daß die Polyester pro Mol Diphenolreste 0,01 bis 0,1 Mol end- oder seitenständige Reste der Formel

$$-CH=CH-CH=CH-R$$

enthalten, wobei R einen $C_1$-$C_8$-Alkylrest oder einen $C_6$-$C_{20}$-Kohlenwasserstoffrest, der mindestens einen aromatischen Ring enthält, bedeutet.

2. Polyester nach Anspruch 1, dadurch gekennzeichnet, daß der Gehalt an Resten der Formel

$$-CH=CH-CH=CH-R$$

0,02 bis 0,06 Mol pro Mol Diphenolreste beträgt.

3. Polyester nach Ansprüchen 1 und 2, dadurch gekennzeichnet, daß R Methyl oder Phenyl bedeutet.

4. Polyester nach Ansprüchen 1-3, dadurch gekennzeichnet, daß sie eine relative Viskosität, gemessen bei 25 °C und einer Konzentration von 0,5 Gew.-% in Dichlormethan, von 1,1 bis 2,5 besitzen.

5. Verfahren zur Herstellung der Polyester nach Ansprüchen 1-4 nach an sich bekannten Methoden des Phasengrenzflächenverfahrens oder des Verfahrens in homogener Lösung, dadurch gekennzeichnet, daß man als Kettenabbrecher 0,01 bis 0,1 Mol (pro Mol Diphenol) mindestens einer Verbindung der Formel

$$A-CH=CH-CH=CH-R \qquad (I)$$

einsetzt, worin

R einen $C_1$-$C_8$-Alkylrest oder einen $C_6$-$C_{20}$-Kohlenwasserstoffrest, der mindestens einen aromatischen Ring enthält,

A $-CH_2-OR^1$ oder

$$-\underset{\underset{O}{\|}}{C}-R^2$$

$R^1$ ein Wasserstoffatom oder

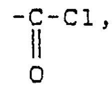

$R^2$ —Cl oder —O—Z—$R^3$,
$R^3$ —OH, —COCl oder —OCOCl und
Z einen zweiwertigen ein- oder mehrkernigen aromatischen Rest mit 6-30 C-Atomen bedeuten.

6. Verfahren nach Anspruch 5, dadurch gekennzeichnet, daß man übliche Kettenabbrecher und solche der-Formel I einsetzt, wobei die Gesamtmenge 0,04 bis 0,15 Mol Kettenabbrecher pro Mol Diphenol beträgt.

7. Verwendung der Polyester nach Ansprüchen 1-4 zur Herstellung von Spritzgußartikeln, Folien und Überzügen.

## Claims

1. Thermoplastic aromatic polyesters based on diphenols, terephthalic acid and isophthalic acid (acid ratio 7 : 3 to 3 : 7), chain terminators and, optionally, branching agents, characterised in that the polyesters contain, per mole of diphenol radicals, 0.01 to 0.1 mole of terminal or lateral radicals of the formula

—CH=CH—CH=CH—R

wherein R denotes a $C_1$-$C_8$-alkyl radical or a $C_6$-$C_{20}$ hydrocarbon radical which contains at least one aromatic ring.

2. Polyesters according to Claim 1, characterised in that the content of radicals of the formula

—CH=CH—CH=CH—R

is 0.02 to 0.06 mole per mole of diphenol radicals.

3. Polyesters according to Claims 1 and 2, characterised in that R denotes methyl or phenyl.

4. Polyesters according to Claims 1-3, characterised in that they have a relative viscosity of 1.1 to 2.5, measured at 25 °C and a concentration of 0.5 % by weight in dichloromethane.

5. Process for the production of the polyesters according to Claims 1-4 by known methods of the phase boundary process or of the process in homogeneous solution, characterised in that 0.01 to 0.1 mole (per mole of diphenol) of at least one compound of the formula

A—CH=CH—CH=CH—R (I)

wherein
R denotes a $C_1$-$C_8$-alkyl radical or a $C_6$-$C_{20}$ hydrocarbon radical containing at least one aromatic ring,
A denotes —$CH_2$—$OR^1$ or

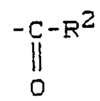

$R^1$ denotes a hydrogen atom or

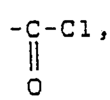

$R^2$ denotes —Cl or —O—Z—$R^3$,
$R^3$ denotes —OH, —COCl or —OCOCl and
Z denotes a divalent mono- or polynuclear aromatic radical with 6-30 C atoms,
is used as the chain terminator.

6. Process according to Claim 5, characterised in that customary chain terminators and those of the formula I are used, the total quantity being 0.04 to 0.15 mole of chain terminator per mole of diphenol.

7. Use of the polyesters according to Claims 1-4 for the production of injection-moulded articles, films and coatings.

**Revendications**

1. Polyesters aromatiques thermoplastiques à base de diphénols, d'acide téréphtalique et d'acide isophtalique (rapport des acides 7 : 3 à 3 : 7), d'agents de rupture de chaînes et éventuellement d'agents de réticulation, caractérisés en ce que les polyesters contiennent par mole de restes diphénols 0,01 à 0,1 mole de restes terminaux ou latéraux de formule

$$—CH=CH—CH=CH—R$$

dans laquelle R représente un reste alkyle en $C_1$-$C_8$ ou un reste d'hydrocarbure en $C_6$-$C_{20}$ qui contient au moins un noyau aromatique.

2. Polyesters selon la revendication 1, caractérisés en ce que la teneur en restes de formule

$$—CH=CH—CH=CH—R$$

est de 0,02 à 0,06 mole par mole de restes diphénols.

3. Polyesters selon les revendications 1 et 2, caractérisés en ce que R représente un groupe méthyle ou phényle.

4. Polyesters selon les revendications 1-3, caractérisés en ce qu'ils possèdent une viscosité relative, mesurée à 25 °C et à une concentration de 0,5 % en poids dans le dichlorométhane, de 1,1 à 2,5.

5. Procédé pour la fabrication des polyesters selon les revendications 1-4 selon des méthodes connues en soi du procédé à l'interphase ou du procédé en solution homogène, caractérisé en ce que l'on utilise comme agents de rupture de chaînes 0,01 à 0,1 mole (par mole de diphénol) d'au moins un composé de formule

$$A—CH=CH—CH=CH—R \qquad (I)$$

dans laquelle

R représente un reste alkyle en $C_1$-$C_8$ ou un reste d'hydrocarbure en $C_6$-$C_{20}$ qui contient au moins un noyau aromatique,

A représente $—CH_2—OR^1$ ou

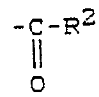

$R^1$ représente un atome d'hydrogène ou un groupe

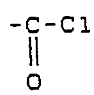,

$R^2$ représente —Cl ou $—O—Z—R^3$,

$R^3$ représente —OH, —COCl ou —OCOCl et

Z représente un reste aromatique mono- ou polynucléaire divalent en $C_6$-$C_{30}$.

6. Procédé selon la revendication 5, caractérisé en ce que l'on utilise des agents habituels de rupture de chaînes et ceux de formule I, la quantité totale étant de 0,04 à 0,15 mole d'agents de rupture de chaînes par mole de diphénol.

7. Utilisation des polyesters selon les revendications 1 à 4 pour la fabrication des articles à moulage par injection, des feuilles et des couches superficielles.